# FASCICULE DE BREVET EUROPEEN

(11) **EP 0 872 720 B1**
(45) Date de publication et mention de la délivrance du brevet: **30.06.2004**
(21) Numéro de dépôt: 98400931.6
(22) Date de dépôt: 15.04.1998
(51) Int. Cl.: G01L 9/00

(54) **Microsystème à membrane souple pour capteur de pression et procédé de réalisation**
Mikrostruktur mit flexibler Membran zur Druckmessung und Verfahren zu ihrer Herstellung
Microstructure with flexible diaphragm for measuring pressure and procedure to produce

(30) Priorité: 17.04.1997 FR 9704767
(43) Date de publication de la demande: 21.10.1998
(60) Demande divisionnaire: 03100903.8
(73) Titulaire: COMMISSARIAT A L'ENERGIE ATOMIQUE, 75015 Paris (FR)
(72) Inventeur: Delaye, Marie-Thérèse, 38100 Grenoble (FR)
(74) Mandataire: Poulin, Gérard

(56) Documents cités:
- EP-A- 0 351 701
- EP-A- 0 714 017
- DE-A- 4 401 999
- US-A- 5 453 628
- US-A- 5 471 723
- US-A- 5 573 679

## Description

### Domaine technique

La présente invention concerne un microsystème à membrane souple pour capteur de pression, et son procédé de réalisation.

On entend par microsystème à membrane souple aussi bien une cellule de capteur de pression, par exemple, du type à mesure capacitive, qu'une cellule d'interrupteur déclenché par la pression.

L'invention trouve des applications dans la fabrication de microcapteurs, de micro-interrupteurs de micro-condensateurs variables, et de façon plus générale de micro-composants pouvant être réalisés de façon intégrée avec un circuit électronique associé. Une application particulière de l'invention est la fabrication d'un capteur d'empreintes.

### Etat de la technique antérieure

Le document (1) dont la référence est indiquée à la fin de la description décrit la réalisation de microcapteurs de pression avec une membrane en silicium déformable.

De tels microcapteurs présentent en raison de leur procédé de fabrication des difficultés de compatibilité avec la réalisation conjointe de circuits intégrés de type CMOS. Par ailleurs, ces capteurs comprennent une membrane généralement conductrice, ce qui peut poser des problèmes d'isolation électrique dans le cas d'une miniaturisation des composants.

On connaît également des capteurs à membrane isolante réalisés sur des substrats de verre. De tels capteurs sont par exemple décrits dans le document (2) dont la référence est indiquée à la fin de la description.

Le document (3), dont la référence est également indiquée à la fin de la description, montre la réalisation de capteurs associés à des circuits électroniques et juxtaposés sur un même substrat. Une telle conception est particulièrement avantageuse notamment dans le cadre d'une fabrication en série.

Toutefois, elle présente un certain nombre de limitations liées aux problèmes d'interconnexion entre les capteurs et les circuits électroniques correspondants. En effet, les liaisons électriques entre les capteurs et les circuits intégrés disposés sur le même substrat engendrent des effets néfastes de capacité parasite. Par ailleurs, les liaisons électriques apparaissent comme encombrantes et constituent un obstacle à une miniaturisation accrue des dispositifs.

Enfin, la réalisation séparée des capteurs et des circuits électroniques associés se traduit par des coûts de fabrication élevés.

Le document (4) décrit un procédé de fabrication de microsystème pour capteur de pression absolu dans lequel un diaphragme en polysilicium est formé sur une couche sacrificielle déposée sur un substrat semi-conducteur, l'épaisseur de cette couche étant contrôlable. La couche sacrificielle est éliminée pour définir une cavité de diaphragme, qui est scellée avec un bouchon. Les électrodes dans les surfaces définissant cette cavité sont défléchies en réponse aux variations de pression, tout en définissant une capacité très petite et minimum.

Le document (5) décrit un capteur de pression qui comprend un corps de base et un diaphragme qui sont assemblés en parallèle et à une certaine distance l'un de l'autre pour former une chambre, un élément annulaire de métal étant disposé entre eux.

### Exposé de l'invention

L'invention a pour but de proposer un procédé de fabrication de microsystèmes à membrane souple ne présentant pas les limitations exposées ci-dessus. En particulier, un but est de proposer des microsystèmes à membrane souple réalisés de façon intégrée sur un substrat selon un procédé compatible avec la réalisation de circuits intégrés MOS dans le même substrat.

Un but est aussi de réduire notablement l'encombrement des microsystèmes et des circuits électroniques associés.

Un but est aussi de proposer des capteurs de pression ou des micro-interrupteurs intégrés pouvant être agencés sous la forme d'un grand nombre de cellules juxtaposées, par exemple, sous forme de matrice.

Un but est encore de proposer un détecteur d'empreintes utilisant de tels capteurs.

Enfin, un but est de réduire le coût de fabrication des microsystèmes à membrane souple.

Pour atteindre ces buts, l'invention a plus précisément pour objet un procédé de fabrication d'un microsystème pour capteur de pression comportant les étapes de :
a) dépôt et mise en forme d'au moins une première couche conductrice sur un support, la couche conductrice formant au moins une première électrode,
b) dépôt et mise en forme d'au moins une couche de matériau sacrificiel recouvrant la première couche conductrice,
c) dépôt et mise en forme d'une deuxième couche conductrice sur la couche de matériau sacrificiel dans une région située au-dessus de la première couche conductrice, la deuxième couche conductrice formant une deuxième électrode,
d) formation d'une première couche de membrane isolante recouvrant et entourant la couche de matériau sacrificiel et la deuxième couche conductrice,
e) élimination de la couche de matériau sacrificiel,
f) mise en forme de la première couche de membrane.

Les étapes du procédé sont de préférence exécutées dans l'ordre successif mentionné. Il est toutefois possible d'intervertir l'ordre des étapes e) et f). Par ailleurs, dans une mise en oeuvre particulière, la mise en forme des couches mentionnées aux étapes b) et c) peut éventuellement être réalisée de façon concomitante.

En particulier, lorsque la première couche de membrane doit subir d'importantes opérations de découpage ou d'amincissement, il est avantageux de ne la libérer, par élimination de la couche sacrificielle, que lorsque sa mise en forme est achevée.

La couche de matériau sacrificiel est mise en forme de façon à définir la forme et la taille d'une chambre fermée dont une paroi est formée par la première couche de membrane.

Le procédé de l'invention permet de réaliser des microsystèmes et notamment des cellules pour capteurs de pression de façon simple et peu coûteuse, adaptée à une intégration commune avec des circuits de type CMOS ou BiCMOS sur un même substrat. Cet aspect apparaîtra de façon plus détaillée dans la suite de la description.

De façon avantageuse, grâce au procédé de l'invention, les première et deuxième couches conductrices formant des électrodes ne sont séparées par aucune couche de matériau. Après l'élimination de la couche de matériau sacrificiel, la deuxième couche conductrice est maintenue séparée de la première couche conductrice au moyen de la couche de membrane souple, en l'absence de pression exercée sur cette dernière.

En ajustant l'épaisseur de la couche de matériau sacrificiel, il est possible de réaliser une cellule de capteur particulièrement sensible.

Par ailleurs, les première et deuxième couches de matériau conducteur peuvent être séparées d'une très faible distance seulement, par exemple, de l'ordre de 0,1 µm à 5 µm environ. Cette caractéristique permet également de réaliser des capteurs sensibles. En effet, les première et deuxième couches peuvent former, par exemple, les armatures d'un condensateur dont la capacité varie en fonction d'une déformation de la couche de membrane.

Dans d'autres applications, le microsystème obtenu par le procédé de l'invention peut aussi constituer un micro-interrupteur. Les première et deuxième couches conductrices peuvent former dans ce cas les bornes de l'interrupteur. Un tel interrupteur est, par exemple, ouvert lorsque la déformation de la couche de membrane est insuffisante pour que les première et deuxième couches conductrices ne viennent en contact, et est fermé quand les couches conductrices sont pressées l'une contre l'autre.

Selon une variante de réalisation du microsystème pour une utilisation comme interrupteur, on forme dans la première couche de matériau conducteur une rainure pour séparer et délimiter deux électrodes, et on forme la deuxième couche conductrice, sur la couche de matériau sacrificiel, dans une région située au-dessus d'au moins une portion de la rainure.

Dans un microsystème réalisé selon cette variante, lors d'une déformation de la couche de membrane, la deuxième couche conductrice vient relier électriquement les deux électrodes de la première couche conductrice qui forment ainsi respectivement les bornes de l'interrupteur.

Selon une mise en oeuvre particulière du procédé de l'invention, l'élimination de la couche de matériau sacrificiel peut comporter l'ouverture d'au moins un canal de gravure à travers la première couche de membrane, la gravure de la couche de matériau sacrificiel, et la formation d'une deuxième couche de membrane recouvrant la première couche de membrane et obturant le canal de gravure, la deuxième couche de membrane étant également mise en forme lors de l'étape f) du procédé.

En effet, l'étage f) peut comporter, par exemple, l'élimination partielle de la deuxième couche de membrane et l'amincissement de la première couche de membrane dans une région entourant la deuxième électrode.

L'amincissement de la première membrane permet d'ajuster précisément sa souplesse ou sa flexibilité et donc la sensibilité du microsystème.

De préférence, l'amincissement a lieu dans une région entourant l'électrode formée dans la deuxième couche conductrice, mais non au-dessus de cette électrode. Cette caractéristique permet de conférer à la membrane une rigidité supérieure dans la région de la deuxième électrode et ainsi éviter une déformation trop importante de cette dernière, lorsque la membrane subit une pression.

De façon préférentielle, la formation de la première couche de membrane peut comporter le dépôt successif des trois sous-couches de matériau dont au moins une sous-couche constitue une sous-couche d'arrêt de gravure. L'amincissement de la première couche de membrane est alors effectuée par une gravure avec arrêt de gravure sur la sous-couche d'arrêt de gravure.

Ainsi, l'épaisseur finale de la couche de membrane peut être très faible sans risquer un perçage lors de la gravure. De plus, l'épaisseur peut être déterminée avec une grande précision.

Selon un autre aspect avantageux, on peut pratiquer le canal pour l'élimination de la couche de matériau sacrificiel dans une région de la première couche de membrane située au-dessus d'une partie périphérique de la couche de matériau sacrificiel.

Cette mesure permet d'éviter de rigidifier la membrane dans le cas où du matériau de la deuxième couche de membrane, s'introduisant dans le canal, formerait un bouchon prenant appui sur le support de la première couche conductrice. La formation d'un bouchon dans une région périphérique de la membrane n'affecte en effet que très peu la flexibilité de celle-ci.

Selon une mise en oeuvre particulière du procédé de l'invention, la mise en forme de la première couche de membrane peut aussi avoir lieu avant l'élimination de la couche de matériau sacrificiel. Dans ce cas, la mise en forme de la couche de membrane peut comporter la gravure d'un ou de plusieurs canaux sous la forme de tranchées traversantes atteignant la couche de matériau sacrificiel.

Ces tranchées sont utilisées pour l'élimination de la couche de matériau sacrificiel.

Elles permettent aussi, lorsque la couche de matériau sacrificiel est éliminée, de libérer en partie une portion de la couche de membrane. Les tranchées peuvent être en effet agencées pour définir une partie du périmètre d'une portion de la couche de membrane. Les tranchées sont alors pratiquées de préférence au-dessus d'une partie périphérique de la couche de matériau sacrificiel.

La première couche conductrice peut être réalisée affleurante avec la surface du support. Dans ce cas, lors de l'étape a), on forme la première couche conductrice dans une dépression pratiquée dans le support de façon que la première couche conductrice et le support présentent des surfaces affleurantes.

Une telle construction peut être avantageuse lorsque le microsystème est utilisé comme une cellule de capteur à mesure capacitive de la déformation de la membrane.

Toutefois, lorsque le microsystèmé est utilisé comme interrupteur, il est préférable qu'au moins l'une des première et deuxième électrodes fasse saillie sur son support.

Ceci peut être obtenu par exemple en formant la deuxième couche conductrice dans une dépression, pratiquée dans la couche de matériau sacrificiel, dans une région située au-dessus de la première couche conductrice.

Selon une variante possible, lors de l'étape b), on forme une première couche de matériau sacrificiel entourant au moins une partie de la première couche conductrice puis, on forme une deuxième couche de matériau sacrificiel recouvrant la première couche de matériau sacrificiel et ladite partie de première couche conductrice, et on met en forme les première et deuxième couches de matériau sacrificiel. Grâce à cette mesure, la deuxième couche de matériau sacrificiel présente en sa surface supérieure libre une dépression que viendra remplir la deuxième couche conductrice. Ainsi, après l'élimination du matériau sacrificiel, la deuxième couche conductrice fait saillie sur la surface de la couche de membrane tournée vers le support.

L'invention concerne également une cellule de capteur de pression comportant :
- un substrat comportant au moins une première électrode,
- une membrane déformable isolante fixée par un bord périphérique au substrat et définissant une chambre fermée autour d'au moins une partie de la première électrode,
- une seconde électrode formée sur une paroi de la membrane déformable, tournée vers la première électrode, et maintenue séparée de la première électrode en l'absence de pression exercée sur la membrane
ladite cellule comprenant un circuit électronique intégré dans le substrat, et les électrodes reliées à ce circuit électronique s'étendant jusque sur le substrat.

La cellule de capteur de pression peut en outre comporter ou être associée à un circuit de mesure électronique intégré dans le substrat relié aux première et deuxième électrodes.

De façon avantageuse, le circuit électronique peut être disposé dans le substrat sous la première électrode.

Grâce à cette caractéristique, une meilleure intégration de la cellule et du circuit intégré peut être obtenue.

Ceci permet notamment de réaliser un capteur d'empreintes comportant une pluralité de cellules de capteur juxtaposées, par exemple sous forme matricielle. L'ensemble des cellules et des circuits électroniques associés peut alors être réalisé sur ou dans un même support.

Il convient de souligner que les microsystèmes et cellules conformes à l'invention sont particulièrement adaptés pour une utilisation avec des circuits intégrés de type CMOS (Complementary Metal Oxide Semiconductor) ou BiCMOS (BipolarCMOS).

D'autres caractéristiques et avantages de l'invention ressortiront mieux de la description qui va suivre, en référence aux figures des dessins annexés. Cette description est donnée à titre purement illustratif et non limitatif.

### Brève description des figures

- les figures 1 à 8 sont des coupes schématiques illustrant des étapes successives d'un procédé de fabrication d'un microsystème, conforme à l'invention.
- Les figures 9 et 10 montrent en coupe une étape d'amincissement local d'une couche de matériau sacrificiel,
- les figures 11 et 12 montrent en coupe une variante de l'étape de réalisation de la couche de matériau sacrificiel,
- les figures 13 et 14 montrent en coupe encore une autre variante de l'étape de réalisation de la couche de matériau sacrificiel,
- la figure 15 est une coupe schématique, à plus grande échelle, d'un microsystème conforme à l'invention, constituant une variante de celui de la figure 8,
- la figure 16 est une coupe schématique, à plus grande échelle, d'un microsystème conforme à l'invention constituant une variante de celui de la figure 15.

### Description détaillée de modes de mise en oeuvre de l'invention.

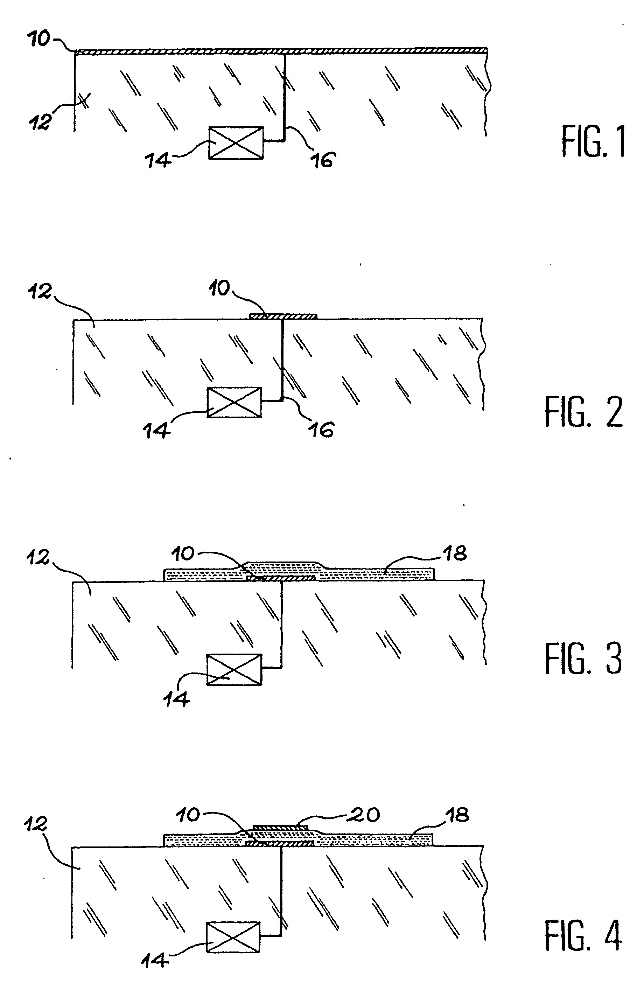

La figure 1 montre une première étape d'un procédé conforme à l'invention. Une première couche 10 d'un matériau conducteur tel que, par exemple, du titane, du nitrure de titane, du chrome ou tout autre conducteur compatible, est déposée sur un support 12. La couche 10 est déposée par exemple par pulvérisation cathodique ou par évaporation sous vide avec une épaisseur de l'ordre de 100 nm à quelques micromètres. La couche 10 peut également être formée selon toute autre technique de dépôt telle que l'électrolyse, par exemple.

Le support 12 peut être une plaque de substrat, par exemple en silicium, ou en verre, et en particulier une plaque à circuits intégrés. De façon avantageuse, le support 12 contient un ou plusieurs circuits électroniques, tels que des circuits de mesure destinés aux microsystèmes réalisés conformément à l'invention. Ces circuits, préférentiellement du type CMOS ou BiCMOS sont représentés de façon schématique avec la référence 14 sur la figure. La référence 16 désigne une liaison électrique entre le circuit électronique 14 et la première couche conductrice 10.

Une étape de photolithographie et de gravure sèche ou chimique permet de mettre en forme la première couche de matériau conducteur 10 comme le montre la figure 2. La couche de conductrice 10 mise en forme constitue une première électrode du microsystème désignée par la même référence 10 pour des raisons de simplification.

Une étape ultérieure illustrée à la figure 3 comprend le dépôt et la mise en forme d'une couche 18 de matériau sacrificiel. La forme et l'épaisseur de cette couche définissent les dimensions d'une chambre du microsystème permettant la déformation d'une membrane flexible décrite ultérieurement. L'épaisseur de la couche sacrificielle est par exemple comprise entre 0,1 µm et 5 µm. La couche de matériau sacrificiel est réalisée en un matériau présentant une bonne sélectivité de gravure par rapport aux autres matériaux utilisés pour la réalisation du microsystème. Le matériau de la couche sacrificielle est aussi choisi pour sa capacité à être gravé sur le grandes distances à partir d'un endroit donné.

La couche sacrificielle peut être réalisée en un métal tel que le tungstène ou l'aluminium, en un matériau organique tel que les résines photosensibles ou le polyimide, en un matériau diélectrique tel que l'oxyde de silicium (SiO₂) ou en tout matériau présentant les qualités indiquées ci-dessus.

Une deuxième couche de matériau conducteur est formée au-dessus de la couche de matériau sacrificiel puis est mise en forme par gravure pour former une deuxième électrode.

Cette deuxième électrode est représentée à la figure 4 avec la référence 20. Elle est située au moins partiellement au-dessus de la première électrode 10 et en est séparée par la couche de matériau sacrificiel. La deuxième couche de matériau conducteur est réalisée par exemple en Ti, TiN ou Cr avec une épaisseur de l'ordre de 100 nm à quelques µm. Elle est réalisée selon des techniques de pulvérisation cathodique, d'évaporation ou d'électrolyse.

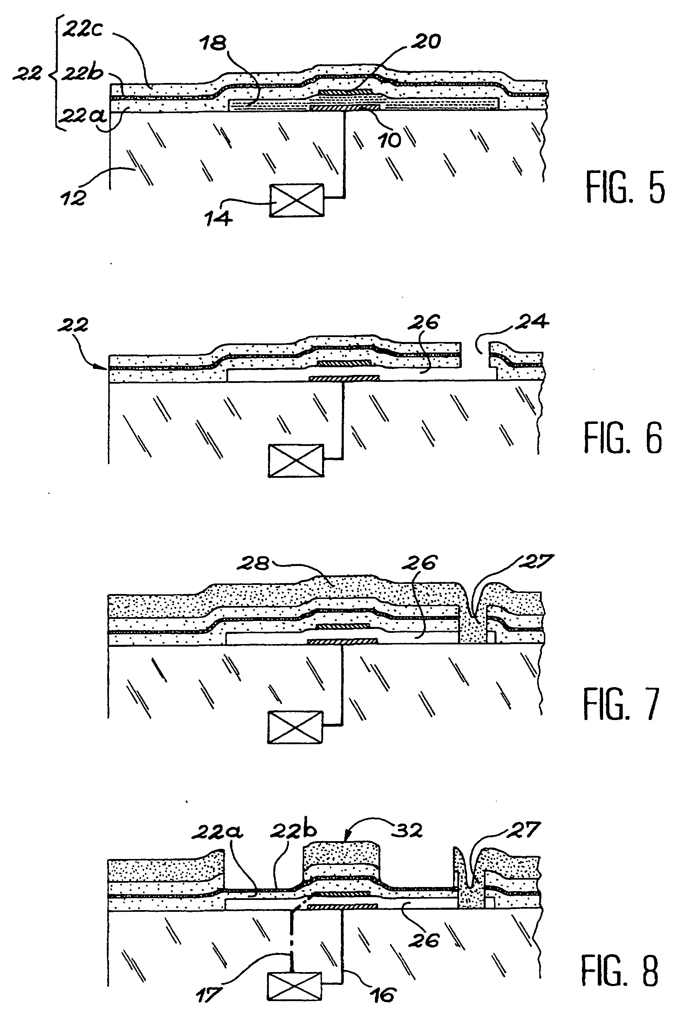

Une étape ultérieure du procédé, représentée à la figure 5 comprend la formation d'une première couche 22 dite de membrane. La couche de membrane 22 recouvre la deuxième électrode 20, la couche de matériau sacrificiel 18 et s'étend au moins en partie sur la surface du support 12.

La première couche de membrane 22 peut être une monocouche en un matériau isolant électrique. Il s'agit par exemple d'une couche de Si₃N₄ d'une épaisseur de 0,8 µm déposée selon une technique de dépôt chimique en phase vapeur assistée par plasma (PECVD). Elle peut aussi, comme le montre la figure 5 présenter une structure feuilletée avec trois sous-couches 22a, 22b et 22c. La sous-couche médiane 22b est une sous-couche d'arrêt de gravure utilisée lors d'un amincissement ultérieur de la première couche de membrane. Cet amincissement est décrit dans la suite du texte.

A titre d'exemple, une couche de membrane 22, d'une épaisseur totale de 0,76 µm, peut comporter une sous-couche 22a de 0,3 µm de Si₃N₄, une sous-couche d'arrêt 22b de 0,06 µm de SiO₂ et une sous-couche 22c de 0,4 µm de Si₃N₄. La sous-couche d'arrêt de gravure peut être également une couche métallique. Elle est alors de préférence isolée de la deuxième électrode 20 par une première sous-couche 22a en un matériau isolant électrique.

Comme le montre la figure 6, une ouverture 24, formant un canal de gravure, est pratiquée dans la membrane 22 pour atteindre une région périphérique de la couche de matériau sacrificiel. A travers cette ouverture 24 la couche sacrificielle est entièrement éliminée par exemple par attaque chimique. L'élimination du matériau sacrificiel libère une chambre 26 du microsystème qui permet la déformation de la couche de membrane 22. La deuxième électrode 20 reste adhérente à la couche de membrane 22 qui la maintient séparée de la première électrode 10.

Une deuxième couche de membrane 28 est ensuite déposée sur la première couche de membrane 22 pour reboucher l'ouverture 24 et fermer ainsi la chambre 26.

La deuxième couche de membrane est de préférence une couche de SiO₂, Si₃N₄ ou de métal. Il s'agit par exemple d'une couche de Si₃N₄ d'une épaisseur de 0,8 µm déposée par une technique de dépôt de vapeur chimique assistée par plasma PECVD.

L'épaisseur de la deuxième couche de membrane 26 est de façon générale choisie suffisante pour obturer l'ouverture 24 pratiquée dans la première couche de membrane. On peut noter sur la figure 7 la formation d'un bouchon 27 qui prend éventuellement appui sur la surface du support 12. Lorsque l'ouverture 24 est pratiquée dans une région périphérique, un tel bouchon ne compromet pas la flexibilité de la (ou des) couche(s) de membrane.

Préférentiellement, la formation de la deuxième couche de membrane 28 peut être réalisée sous vide pour obtenir une chambre 26 étanche sous vide.

Une étape suivante, montrée à la figure 8, consiste à éliminer la deuxième couche de membrane 26 dans une région entourant la deuxième électrode 20 et à amincir la première couche de membrane dans la même région.

L'amincissement peut être effectué par exemple par gravure avec arrêt sur la sous-couche d'arrêt 22b décrite précédemment.

L'épaisseur restante de la première couche de membrane est alors de l'ordre de 0,3 à 0,4 µm. Cette épaisseur peut être ajustée en fonction de la taille de la chambre 26, de la nature des matériaux utilisés pour la couche de membrane et en fonction d'une sensibilité du microsystème réalisé.

En effet, l'ajustage de l'épaisseur conditionne la flexibilité de la membrane. Toutefois, la première couche de membrane est préférentiellement maintenue suffisamment épaisse pour éviter un effondrement dans la chambre 26, notamment lorsque la chambre 26 est maintenue sous vide.

Par ailleurs, une partie 32 de la première couche de membrane et éventuellement de la deuxième couche de membrane peut être préservée au-dessus de la deuxième électrode 20 afin d'éviter sa déformation.

De la même façon, une partie de la deuxième couche de membrane est également préservée dans la région de l'ouverture 24 et du bouchon 27.

Il convient enfin de noter qu'une liaison électrique 17 représentée très schématiquement en trait mixte sur la figure 8 peut également être prévue entre la deuxième électrode 20 et le circuit électronique 14.

Le circuit électronique 14 est, par exemple, équipé de moyens de mesure d'une capacité électrique entre les première et deuxième électrodes 10, 20. Une pression exercée sur la membrane provoque sa déformation et une modification de la distance séparant les électrodes, et partant, d'une capacité électrique mesurée entre ces électrodes.

Les première et deuxième électrodes peuvent également constituer des bornes de contact lorsque le microsystème est utilisé comme micro-interrupteur.

Dans ce cas, pour assurer un bon contact entre les première et deuxième électrodes, lorsque le micro-interrupteur est actionné, il est avantageux qu'au moins l'une des première et deuxième électrodes fassent saillie sur leur surface de support.

La forme de la deuxième électrode dépend de la forme de la deuxième couche conductrice formée sur la couche de matériau sacrificiel et par conséquent de la forme donnée à la surface supérieure de la couche de matériau sacrificiel.

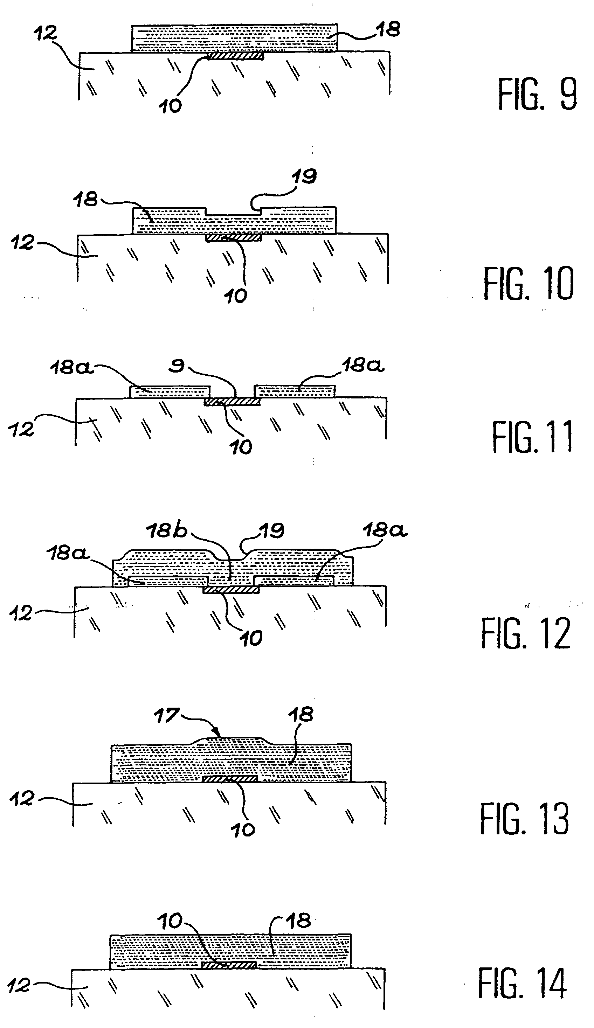

Dans le cas de la figure 9, une couche de matériau sacrificiel 18 est formée au-dessus d'une première électrode 10 dont la surface est affleurante à celle du support 12. La surface de la couche sacrificielle est donc plane. Pour une meilleure lisibilité l'épaisseur de la couche de matériau sacrificiel est représentée plus grande sur les figures 9 à 14.

Une empreinte 19 gravée dans la surface supérieure de la couche 18 de matériau sacrificiel, comme le montre la figure 10, permet de former, lors d'une étape ultérieure, une deuxième couche de matériau conducteur qui fait saillie vers la première électrode 10.

Pour réaliser l'empreinte 19 une deuxième technique est proposée. Cette technique consiste, comme le montre la figure 11, à former d'abord une première couche de matériau sacrificiel 18a qui entoure au moins une partie 9 de la première couche conductrice 10. La surface de la partie 9 de la première couche conductrice forme ainsi un motif en dépression par rapport à la surface libre de la première couche de matériau sacrificiel 18a.

Une deuxième couche de matériau sacrificiel 18b est ensuite formée sur la première couche de matériau sacrificiel 18a et sur la partie 9 de couche conductrice laissée découverte. Ainsi, le motif avec une dépression 19 est reproduit à la surface de la deuxième couche de matériau sacrificiel 18b. Cette dépression, visible à la figure 12, est mise à profit dans la suite du procédé pour réaliser une deuxième couche conductrice formant saillie.

Les figures 13 et 14 montrent la formation de la couche de matériau sacrificiel 18 dans un cas où la première électrode 10 formée sur le support 12 forme une proéminence sur cette surface. La proéminence formée par la couche conductrice 10 se retrouve, comme le montre la figure 13, à la surface supérieure de la couche de matériau sacrificiel 18. Elle est indiquée avec la référence 17. Une telle proéminence provoquerait une formation en retrait de la deuxième couche conductrice dans une région située au-dessus de la première région conductrice 10.

Pour éviter ce phénomène, il est possible, comme le montre la figure 14, d'aplanir la surface supérieure de la couche sacrificielle 18 avant la formation de la deuxième couche conductrice.

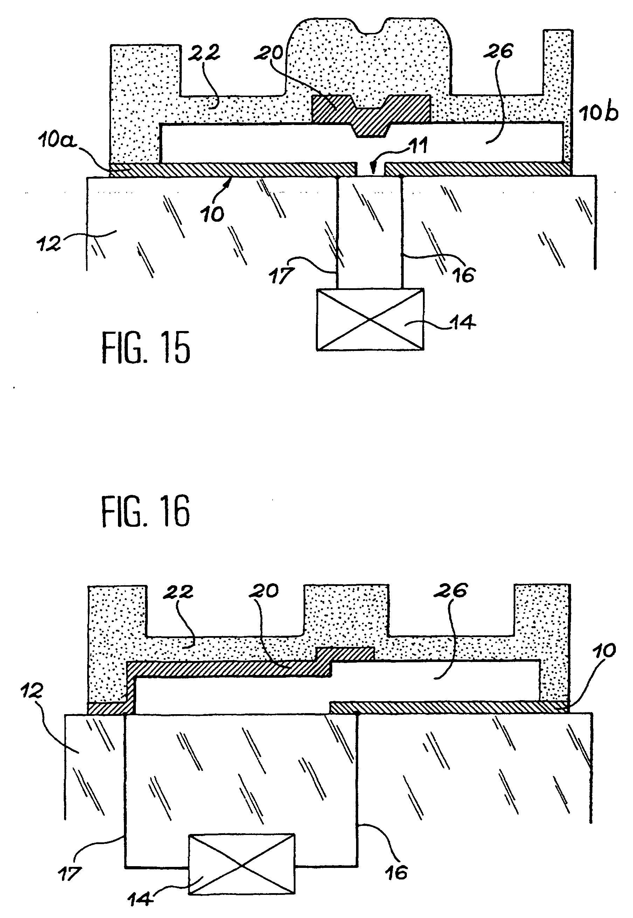

La figure 15 montre, à plus grande échelle, une variante de réalisation d'un microsystème conforme à l'invention. Pour des raisons de simplification des références identiques sont utilisées pour désigner des parties identiques ou similaires à celles des figures précédentes. On peut ainsi se reporter à la description qui précède.

Le microsystème, réalisé sur un substrat 12, comporte une première électrode 10 supportée par ce substrat. La première électrode comporte deux parties 10a et 10b séparées par une rainure 11. Ainsi, les parties 10a et 10b qui sont formées sur un substrat 12 isolant, sont électriquement isolées par le substrat et par la rainure 11. La rainure est située sensiblement au milieu d'une chambre 26 du microsystème, délimitée latéralement et dans sa partie supérieure par une membrane 22 flexible.

Une deuxième électrode 20 fixée à la membrane 22 se situe sensiblement au-dessus d'une région de l'électrode 10 comprenant la rainure 11.

Ainsi, lorsqu'un pression suffisante est exercée sur la membrane 22, l'électrode 20 vient en appui contre les parties 10a et 10b de la première électrode 10 et les relie électriquement.

Le microsystème de la figure 15 peut ainsi être utilisé comme au micro-interrupteur dont les bornes sont les parties 10a et 10b de la première électrode 10.

Le microsystème de la figure 15 peut également être utilisé comme un capteur de pression avec une détection de type tout ou rien.

Les parties 10a et 10b de la première électrode sont respectivement reliées à un circuit 14 intégré dans le substrat 12 sous le microsystème. Ce circuit et les liaisons électriques 16, 17 qui le relient aux parties 10a et 10b de la première électrode sont représentés très schématiquement.

On peut noter également que la membrane 22 est localement amincie pour la rendre plus flexible.

Sur la figure 15, la couche formant la membrane 22 est représentée en contact avec la première électrode. Elle peut cependant être aussi en contact directement avec le substrat 12, comme dans le cas de la figure 6, par exemple.

La figure 16 montre encore une autre possibilité de réalisation d'un microsystème utilisable en particulier comme micro-interrupteur.

Les première et deuxième électrodes 10, 20 situées respectivement sur le substrat 12 et la membrane 22 s'étendent respectivement dans une région de chevauchement située sensiblement au milieu de la chambre 26.

La deuxième électrode 20 maintenue initialement écartée de la première électrode 10 par la membrane 22 flexible, vient, sous l'effet d'une pression suffisante exercée sur la membrane 22, en contact avec la première électrode 10, dans la zone de chevauchement.

Ainsi, les première et deuxième électrodes peuvent constituer les bornes d'un interrupteur. Les première et deuxième électrodes sont reliées électriquement à un circuit électronique 14 qui peut être situé par exemple dans le substrat 12.

A cet effet, la deuxième couche de matériau conducteur, dans laquelle est formée la deuxième électrode s'étend jusque sur le substrat 12.

### DOCUMENTS CITES

***(1)***
   FR-A-2 700 003
***(2)***
   CA-A-2 130 505
*(3)*
   A surface micromachined miniature switch for telecommunication applications with signal frequencies from DC up to 4 GHz de J. Jason et F. Chang, International Conference on Solid State, Sensors and Actuators, Stockholm, Sweden, 25-29 Juin 1995
***(4)***
   DE-A-4401999
***(5)***
   EP 0 351 701

## Revendications

1. Procédé de fabrication d'un microsystème pour capteur de pression comportant les étapes de :
a) dépôt et mise en forme d'au moins une première couche conductrice (10) sur un support (12), la couche conductrice formant au moins une première électrode (10),
b) dépôt et mise en forme d'au moins une couche (18) de matériau sacrificiel recouvrant la première couche conductrice (10),
c) dépôt et mise en forme d'une deuxième couche conductrice (20) sur la couche de matériau sacrificiel (18) dans une région située au-dessus de la première couche conductrice (10), la deuxième couche conductrice formant une deuxième électrode (20),
d) formation d'une première couche de membrane (22) isolante recouvrant et entourant la couche de matériau sacrificiel (18) et la deuxième couche conductrice (20),
e) élimination de la couche (18) de matériau sacrificiel,
f) mise en forme de la première couche de membrane.

2. Procédé selon la revendication 1, dans lequel on forme dans la première couche de matériau conducteur (10) une rainure (11) pour séparer et délimiter deux parties (10a, 10b), et dans lequel on forme la deuxième couche conductrice (20) sur la couche de matériau sacrificiel (18) dans une région située au-dessus d'au moins une portion de la rainure (11).

3. Procédé selon la revendication 1 dans lequel l'élimination de la couche (18) de matériau sacrificiel comporte l'ouverture d'au moins un canal de gravure (24) dans la première couche de membrane (22), la gravure de la couche de matériau sacrificiel (18), et la formation d'une deuxième couche de membrane (28) recouvrant la première couche de membrane et obturant le canal de gravure (24), la deuxième couche de membrane (28) étant également mise en forme lors de l'étape f) du procédé.

4. Procédé selon la revendication 3, dans lequel on pratique le canal (24) dans une région de la première couche de membrane (22) située au-dessus d'une partie périphérique de la couche (18) de matériau sacrificiel.

5. Procédé selon la revendication 1, dans lequel la mise en forme de la première couche de membrane (22) a lieu avant l'élimination de la couche de matériau sacrificiel (18), dans lequel la mise en forme de la première couche de membrane (22) comporte la gravure d'au moins un canal sous la forme d'une tranchée traversante atteignant la couche de matériau sacrificiel (18), et dans lequel la couche de matériau sacrificiel est éliminée par gravure à travers ledit canal.

6. Procédé selon la revendication 5, dans lequel le canal en forme de tranchée est pratiqué au-dessus d'une partie périphérique de la couche de matériau sacrificiel (18) pour libérer une portion de la première couche de membrane (22).

7. Procédé selon la revendication 1 dans lequel lors de l'étape a) on forme la première couche conductrice (10) dans une dépression pratiquée dans le support (12) de façon que la première couche conductrice (10) et le support (12) présentent des surfaces affleurantes.

8. Procédé selon l'une des revendications 1 à 7, dans lequel on forme la deuxième couche conductrice (20) dans une dépression pratiquée dans la couche de matériau sacrificiel (18) dans une région située au-dessus de la première couche conductrice (10).

9. Procédé selon l'une des revendications 1 à 8, dans lequel, lors de l'étape b), on forme une première couche (18a) de matériau sacrificiel entourant au moins une partie (9) de la première couche conductrice (10) puis, on forme une deuxième couche (18b) de matériau sacrificiel recouvrant la première couche (18a) de matériau sacrificiel et ladite partie (9) de la première couche conductrice (10), et on met en forme les première et deuxième couches de matériau sacrificiel.

10. Procédé selon la revendication 3, dans lequel l'étape f) comporte l'élimination partielle de la deuxième couche de membrane (28) et l'amincissement de la première couche de membrane (22), dans une région entourant la deuxième électrode (20).

11. Procédé selon la revendication 10 dans lequel la formation de la première couche de membrane (22) comprend le dépôt successif des trois sous-couches (22a, 22b, 22c) de matériau dont au moins une sous-couche (22b) constitue une sous-couche d'arrêt de gravure, et dans lequel l'amincissement de la première couche de membrane (22) est effectuée par une gravure avec arrêt de gravure sur la sous-couche (22b) d'arrêt de gravure.

12. Cellule de capteur de pression comportant :
- un substrat (12) comportant au moins une première électrode (10),
- une membrane déformable isolante (22) fixée par un bord périphérique au substrat (12) et définissant une chambre (26) fermée autour d'au moins une partie de la première électrode (10), et
- une seconde électrode (20) formée sur une paroi de la membrane (22) tournée vers la première électrode (10), la seconde électrode (20) étant maintenue séparée de la première électrode (10) en l'absence de pression exercée sur la membrane (22),
ladite cellule comprenant un circuit électronique (14) intégré dans le substrat (12) et les électrodes (10, 20) reliées à ce circuit électronique (14) s'étendant jusque sur le substrat (12).

13. Cellule de capteur selon la revendication 12, dans laquelle le circuit de mesure électronique (14) intégré dans le substrat (12) est relié aux première et deuxième électrodes (10, 20).

14. Cellule selon la revendication 13, dans laquelle le circuit électronique (14) est disposé dans le substrat (12) sous la première électrode (10).

15. Cellule selon la revendication 13, dans lequel le circuit intégré (14) est du type CMOS ou du type BiCMOS.

16. Cellule selon la revendication 12, dans laquelle la membrane (22) comporte une partie rigide au-dessus de la deuxième électrode (20).

17. Cellule selon la revendication 13, dans laquelle le circuit de mesure comporte des moyens de capacimètre pour mesurer une variation de capacité électrique entre les première et deuxième électrodes (10, 20).

18. Cellule selon la revendication 12, dans laquelle la première électrode (10) comporte une première et une deuxième parties (10a, 10b) séparées par une rainure (11), et dans laquelle la deuxième électrode (20) est située au moins en partie au-dessus de la rainure (11), de façon à être appliquée contre les première et deuxième parties (10a, 10b) pour les relier électriquement lorsqu'une pression suffisante est exercée sur la membrane (22).

19. Capteur d'empreintes comportant une pluralité de cellules de capteur, selon l'une des revendications 12 à 18, juxtaposées.

20. Capteur selon la revendication 19, dans lequel toutes les cellules sont réalisées sur un même substrat (12).

## Patentansprüche

1. Verfahren zur Herstellung eines Mikrosystems für einen Druckfühler mit den folgenden Schritten:
a) Aufbringung und Formgebung mindestens einer ersten leitenden Schicht (10) auf einem Träger (12), wobei die leitende Schicht mindestens eine erste Elektrode (10) bildet,
b) Aufbringung und Formgebung mindestens einer Opfermaterialschicht (18), welche die erste leitende Schicht (10) bedeckt,
c) Aufbringung und Formgebung einer zweiten leitenden Schicht (20) auf der Opfermaterialschicht (18) in einem Bereich, der sich über der ersten leitenden Schicht (10) befindet, wobei die zweite leitende Schicht eine zweite Elektrode (20) bildet,
d) Ausbildung einer ersten isolierenden Membranschicht (22), welche die Opfermaterialschicht (18) sowie die zweite leitende Schicht (20) bedeckt und umgibt,
e) Eliminierung der Opfermaterialschicht (18),
f) Formgebung der ersten Membranschicht.

2. Verfahren nach Anspruch 1, wobei in der ersten Schicht leitenden Materials (10) eine Nut bzw. Rille (11) zum Trennen und Abgrenzen von zwei Abschnitten (10a, 10b) gebildet wird, und wobei die zweite leitende Schicht (20) auf der Opfermaterialschicht (18) in einem Bereich gebildet wird, der sich über mindestens einem Teil der Nut bzw. Rille (11) befindet.

3. Verfahren nach Anspruch 1, wobei die Eliminierung der Opfermaterialschicht (18) das Öffnen mindestens eines Ätzkanals (24) in der ersten Membranschicht (22), das Ätzen der Opfermaterialschicht (18) und das Ausbilden einer zweiten Membranschicht (28), welche die erste Membranschicht bedeckt und den Ätzkanal (24) verschließt, umfasst, wobei die zweite Membranschicht (28) ebenfalls während des Schritts f) des Verfahrens in Form gebracht wird.

4. Verfahren nach Anspruch 3, wobei der Kanal (24) in einen Bereich der ersten Membranschicht (22) eingebracht wird, der sich über einem Umfangsabschnitt der Opfermaterialschicht (18) befindet.

5. Verfahren nach Anspruch 1, wobei die Formgebung der ersten Membranschicht (22) vor dem Eliminieren der Opfermaterialschicht (18) erfolgt, wobei die Formgebung der ersten Membranschicht (22) das Ätzen mindestens eines Kanals in Form eines die Opfermaterialschicht (18) erreichenden Quergrabens umfasst, und wobei die Opfermaterialschicht durch Ätzen über den Kanal eliminiert wird.

6. Verfahren nach Anspruch 5, wobei der Kanal in Grabenform über einem Umfangsabschnitt der Opfermaterialschicht (18) eingebracht wird, um einen Abschnitt der ersten Membranschicht (22) freizulegen.

7. Verfahren nach Anspruch 1, wobei bei dem Schritt a) die erste leitende Schicht (10) in einer Vertiefung, welche in den Träger (12) eingebracht ist, derart ausgebildet wird, dass die erste leitende Schicht (10) und der Träger (12) aneinandergrenzende Oberflächen aufweisen.

8. Verfahren nach einem der Ansprüche 1 bis 7, wobei die zweite leitende Schicht (20) in einer Vertiefung, die in die Opfermaterialschicht (18) eingebracht ist, in einem über der ersten leitenden Schicht (10) gelegenen Bereich gebildet wird.

9. Verfahren nach einem der Ansprüche 1 bis 8, wobei bei dem Schritt b) eine erste Opfermaterialschicht ausgebildet wird, welche mindestens einen Abschnitt (9) der ersten leitenden Schicht (10) umgibt, und dann eine zweite Opfermaterialschicht (18b) ausgebildet wird, welche die erste Opfermaterialschicht und den Abschnitt der ersten leitenden Schicht (10) bedeckt, und dann die ersten und zweiten Opfermaterialschichten in Form gebracht werden.

10. Verfahren nach Anspruch 3, wobei der Schritt f) das teilweise Eliminieren der zweiten Membranschicht (28) und das Dünnermachen der ersten Membranschicht (22) in einem die zweite Elektrode (20) umgebenden Bereich umfasst.

11. Verfahren nach Anspruch 10, wobei die Bildung der ersten Membranschicht (22) das aufeinanderfolgende Aufbringen von drei Material-Unterschichten (22a,22b,22c) umfasst, von denen mindestens eine Unterschicht (22b) eine Ätz-Inhibitionsschicht darstellt, und wobei das Dünnermachen der ersten Membranschicht (22) durch einen Ätzvorgang mit Ätz-Inhibition auf der Ätz-Inhibitions-Unterschicht (22b) erfolgt.

12. Druckfühler-Zelle mit:
- einem Substrat (12), das mindestens eine erste Elektrode (10) umfasst,
- einer verformbaren isolierenden Membran (22), die an einem Umfangsrand am Substrat (12) befestigt ist und eine Kammer (26) festlegt, die um mindestens einen Abschnitt der ersten Elektrode (10) geschlossen ist, und
- einer zweiten Elektrode (20), die an einer der ersten Elektrode (10) zugewandten Wand der Membran (22) ausgebildet ist, wobei die zweite Elektrode (20) von der ersten Elektrode (10) getrennt gehalten wird, wenn kein Druck auf die Membran (22) ausgeübt wird,
wobei die Zelle eine in das Substrat (12) integrierte elektronische Schaltung (14) umfasst und die Elektroden (10,20), die mit dieser elektronischen Schaltung (14) verbunden sind, sich bis auf das Substrat (12) erstrecken.

13. Druckfühler-Zelle nach Anspruch 12, wobei die in das Substrat (12) integrierte elektronische Messschaltung mit der ersten und zweiten Elektrode (10) bzw. (20) verbunden ist.

14. Zelle nach Anspruch 13, wobei die elektronische Schaltung (14) in dem Substrat (12) unter der ersten Elektrode (10) angeordnet ist.

15. Zelle nach Anspruch 13, wobei die integrierte Schaltung (14) vom CMOS-Typ oder vom BiCMOS-Typ ist.

16. Zelle nach Anspruch 12, wobei die Membran (22) einen starren Abschnitt über der zweiten Elektrode (20) aufweist.

17. Zelle nach Anspruch 13, wobei die Messschaltung Kapazitätsmessmittel umfasst, um eine Abweichung der elektrischen Kapazität zwischen der ersten (10) und der zweiten Elektrode (20) zu messen.

18. Zelle nach Anspruch 12, wobei die erste Elektrode (10) einen ersten (10a) und einen zweiten Abschnitt (10b), die durch eine Nut bzw. Rille (11) getrennt sind, aufweist, und wobei sich die zweite Elektrode (20) mindestens teilweise über der Nut bzw. Rille (11) befindet, so dass sie gegen den ersten und zweiten Abschnitt (10a, 10b) anliegt, um sie elektrisch zu verbinden, wenn ein ausreichender Druck auf die Membran (22) ausgeübt wird.

19. Abdruck- bzw. Eindruck-Messfühler, der mehrere nebeneinander angeordnete Fühlerzellen nach einem der Ansprüche 12 bis 18 umfasst.

20. Messfühler nach Anspruch 19, wobei alle Zellen auf ein- und demselben Substrat (12) gefertigt sind.

## Claims

1. Process for manufacturing a microsystem for a pressure sensor comprising the following steps:
a) deposition and shaping of at least one first conducting layer (10) on a support (12), the conducting layer forming at least a first electrode (10),
b) deposition and shaping of at least one layer (18) of sacrificial material covering the first conducting layer (10),
c) deposition and shaping of a second conducting layer (20) on the layer (18) of sacrificial material in a region located above the first conducting layer (10), the second conducting layer forming a second electrode (20),
d) formation of a first insulating membrane layer (22) covering and surrounding the layer (18) of sacrificial material and the second conducting layer (20),
e) elimination of the layer (18) of sacrificial material,
f) shaping of the first membrane layer.

2. Process according to claim 1, in which a groove (11) is formed in the first layer (10) of conducting material to separate and delimit two parts (10a, 10b), and in which the second conducting layer (20) is formed on the layer (18) of sacrificial material in a region located above at least one portion of the groove (11).

3. Process according to claim 1, in which elimination of the layer (18) of sacrificial material may include opening of at least one etching channel (24) in the first membrane layer (22), etching of the layer (19) of sacrificial material and the formation of a second membrane layer (28) covering the first membrane layer and closing the etching channel (24), the second membrane layer (28) also being shaped during step f) in the process.

4. Process according to claim 3, in which the channel (24) is formed in a region in the first membrane layer (22) located above a peripheral part of the layer (18) of sacrificial material.

5. Process according to claim 1, in which the first membrane layer (22) is formed before the sacrificial material layer (18) is eliminated, in which formation of the first membrane layer (22) comprises etching of at least one channel in the form of a through trench reaching the layer (18) of sacrificial material, and in which the layer of sacrificial material is eliminated by etching the said channel.

6. Process according to claim 5, in which the trench shaped channel is made above a peripheral part of the layer (18) of sacrificial material to release part of the first membrane layer.

7. Process according to claim 1, in which during step a), the first conducting layer (10) is formed in a recess made in the support (12) such that the first conducting layer (10) and the support (12) have flush surfaces.

8. Process according to one of claims 1 to 7, in which the second conducting layer (20) is formed in a recess made in the layer (18) of sacrificial material in a region located above the first conducting layer (10).

9. Process according to one of the claims 1 to 8, in which in step b), a first layer (18a) of sacrificial material is formed surrounding at least part (9) of the first conducting layer (10) and then the second layer (18b) of sacrificial material is formed covering the first layer (18a) of sacrificial material and the said part (9) of the first conducting layer (10), and the first and second layers of sacrificial material are shaped.

10. Process according to claim 3, in which step f) comprises partial elimination of the second membrane layer (28) and thinning of the first membrane layer (22) in a region surrounding the second electrode (20).

11. Process according to claim 10, in which the formation of the first membrane layer (22) comprises the successive deposit of three sublayers (22a, 22b, 22c) of material, of which at least one sublayer (22b) forms an etching stop sublayer and in which the first membrane layer (22) is thinned by etching with an etching stop on the etching stop sublayer (22b).

12. Pressure sensor cell comprising:
- a substrate (12) comprising at least a first electrode (10),
- a deformable insulating membrane (22) fixed by a peripheral edge to the substrate (12) and defining a closed chamber (26) around at least part of the first electrode (10), and
- a second electrode (20) formed on a wall of the membrane (22) facing the first electrode (10), the second electrode (20) being kept separate from the first electrode (10) if no pressure is exerted on the membrane (22),
said cell comprising an electronic circuit (14) integrated into the substrate (12) and the electrodes (10, 20) connected to said electronic circuit (14) extend up to the substrate (12).

13. Sensor cell according to claim 12, in which the electronic measurement circuit (14) integrated into the substrate (12) is connected to the first and second electrodes (10, 20).

14. Cell according to claim 13, in which the electronic circuit (14) is placed in the substrate (12) under the first electrode (10).

15. Cell according to claim 13, in which the integrated circuit (14) is of the CMOS type or the BiCMOS type.

16. Cell according to claim 12, in which the membrane (22) comprises a rigid part above the second electrode (20).

17. Cell according to claim 13, in which the measurement circuit comprises a capacitance meter for measuring a variation in the electrical capacitance between the first and the second electrodes (10, 20).

18. Cell according to claim 12, in which the first electrode (10) comprises a first and second parts (10a, 10b) separated by a groove (11) and in which the second electrode (20) is located at least partly above the groove (11) so that it is kept in contact with the first and second parts (10a, 10b) to connect them electrically when sufficient pressure is applied to the membrane (22).

19. Fingerprints sensor comprising a plurality of adjacent sensor cells according to one of the claims 12 to 18 in juxtaposed form.

20. Sensor according to claim 19, in which all the cells are made on the same substrate (12).
